# FASCICULE DE BREVET EUROPEEN

(11) **EP 2 209 982 B1**
(45) Date de publication et mention de la délivrance du brevet: **28.12.2011**
(21) Numéro de dépôt: 08834557.4
(22) Date de dépôt: 23.09.2008
(51) Int. Cl.: F02M 17/22, F02M 31/10

(54) **DISPOSITIF D'ALIMENTATION POUR UN MOTEUR A COMBUSTION INTERNE**
ZUFUHRVORRICHTUNG FÜR VERBRENNUNGSMOTOR
SUPPLY DEVICE FOR INTERNAL COMBUSTION ENGINE

(30) Priorité: 25.09.2007 FR 0706757
(43) Date de publication de la demande: 28.07.2010
(73) Titulaire: GLF Technologies SAS, 21140 Semur-en-Auxois (FR)
(72) Inventeur: GOBLED, Jean-Pierre, F-21140 Semur en Auxois (FR)
(74) Mandataire: Chevalier, Renaud Philippe
(86) Numéro de dépôt international: PCT/EP2008/008211
(87) Numéro de publication internationale: WO 2009/040128

(56) Documents cités:
- DE-C- 29 138
- DE-C- 117 364
- FR-A- 2 167 082
- GB-A- 2 042 076
- US-A- 1 530 882
- US-A- 1 634 022
- US-A- 3 800 768
- US-A- 6 155 239

## Description

### DOMAINE DE L'INVENTION

La présente invention concerne un moteur à combustion interne, et en particulier un dispositif et une méthode pour améliorer l'alimentation du moteur en carburant de façon à optimiser la consommation en carburant par une meilleure combustion dans le moteur, à réduire les gaz d'échappement polluants et à augmenter le rendement du moteur.

### ÉTAT DE LA TECHNIQUE

L'amélioration de la combustion du carburant dans un moteur à combustion interne est un problème qui préoccupe actuellement toute la société. En effet, toute amélioration de combustion augmente le rendement du moteur à combustion interne et réduit la consommation avec comme conséquence une réduction des coûts directs. En même temps, les gaz d'échappement diminuent ainsi que les éléments polluants dans ces gaz, ce qui constitue un très grand avantage pour l'environnement.

Il est connu que les moteurs à GPL (Gaz de pétrole liquéfié) produisent des gaz d'échappement relativement propres, le GPL étant connu comme un carburant propre qui donne une meilleure combustion. Le prix du GPL est aussi normalement plus faible que le prix des autres carburants, ce qui constitue un autre atout pour ce type de carburant. Toutefois, le GPL présente certains désavantages comme son valeur énergétique qui est inférieur aux valeurs des autres carburants comme l'essence ou le gasoil. Le nombre de points de distribution du GPL est aussi inférieur au nombre de points de distribution d'essence ou de gasoil.

Dans le passé, il y a déjà eu des propositions pour créer un carburant qui combine certains avantages du GPL avec les avantages des carburants classiques comme l'essence ou le gasoil. Certaines de ces propositions tendaient à gazéifier dans une certaine mesure le carburant avant de l'envoyer vers le moteur.

Le brevet américain US 6 155 239 (F.D. Dykstra) décrit un système d'alimentation pour moteur à combustion interne dans lequel le réservoir de carburant est également utilisé pour créer un mélange carburant/air. Ce mélange est obtenu par l'utilisation d'une poêle à bulles, se trouvant au fond du réservoir de carburant, par laquelle l'air extérieur est aspiré. Des senseurs, placés dans le tube qui relie le réservoir de carburant avec le moteur, mesurent le rapport air/carburant. Sur la base des valeurs mesurées, un ordinateur contrôle la quantité d'air supplémentaire qui est ajouté au mélange carburant/air, délivré à la sortie du réservoir de carburant. Si le rapport air/carburant est trop riche, de l'air extérieur est ajouté au mélange ; si le rapport est trop petit, du carburant liquide est injecté dans le mélange.

Le brevet américain US 3 800 768 (J.C. Rhodes e.a.) décrit un système pour réduire la quantité de certains éléments nuisibles dans les gaz d'échappement pendant le démarrage et la période de réchauffage du moteur. Pendant ces périodes, le carburateur du moteur est contourné et le moteur est alimenté par un mélange d'air et de certains composants d'essence ayant un point d'ébullition bas. Ce mélange est obtenu en faisant passer de l'air extérieur à travers l'essence dans le réservoir. Une fois que le moteur atteint les conditions opérationnelles normales, le moteur est alimenté en carburant par le carburateur.

Le brevet français FR 2 167 082 (Haas-Volkman) décrit un système pour parfaire l'homogénéité du mélange carburant/air de façon à réduire les gaz nocifs. Selon ce système, un mélange air carburant est ajouté au mélange créé par le carburateur.

La demande de brevet britannique GB 2 042 076 (da Costa) décrit un système qui permet de faire tourner un moteur à combustion interne sur un mélange extrêmement pauvre. Selon cette demande, ce mélange peut être obtenu en faisant passer une partie de l'air extérieur à travers le carburant. Le carburant est chauffé par une déviation sur le circuit de refroidissement du moteur.

Les documents US 1634 022, US 1520 882 decrivent égalment des systèmes comportant un chauffage de carburant.

Tous ces systèmes présentent des inconvénients et faiblesses.

### BUT DE L'INVENTION

But de l'invention est de pourvoir à un dispositif d'alimentation pour un moteur à combustion interne dans lequel le carburant liquide est gazéifié et qui permet de faire tourner le moteur avec un rendement optimal et avec un minimum d'éléments polluants dans les gaz d'échappement.

Selon une première réalisation de l'invention, ce but est atteint par un dispositif d'alimentation pour un moteur à combustion interne ; ce dispositif comporte un récipient avec du carburant, un tuyau d'arrivée d'air muni d'un distributeur d'air immergé dans le carburant et un circuit pour chauffer le carburant selon la revendication 1.

Selon une première variante de l'invention, le distributeur d'air est muni de trous sur ses côtés.

Selon une autre variante de l'invention, le circuit pour chauffer le carburant utilise l'eau de refroidissement du moteur.

Selon encore une autre variante de l'invention, les moyens pour maintenir la température du carburant à une valeur optimale sont constitués par un calorstat, installé dans le circuit pour chauffer le carburant.

Selon encore une autre variante de l'invention, le système pour chauffer le carburant comprend une résistance chauffante.

Selon encore une autre variante de l'invention, la valeur optimale de la température du carburant dans le récipient est maintenue à une valeur moyenne de 22°C, plus ou moins quelques degrés.

Selon encore une autre variante de l'invention, le dispositif d'alimentation pour un moteur à combustion interne comprend des moyens pour « essorer » le mélange air/carburant.

Selon encore une autre variante de l'invention, le dispositif d'alimentation pour un moteur à combustion interne comprend un élément de stabilisation, situé au-dessus du distributeur d'air. Cet élément de stabilisation peut être constitué par une couche de copeaux inox.

Selon une seconde réalisation de l'invention, le but de l'invention est également atteint par un dispositif d'alimentation pour un moteur à combustion interne dans lequel le carburant est gazéifié, le dispositif comportant un récipient avec du carburant, une pompe à vide créant une dépression dans ledit récipient et aspirant les gaz de carburant qui se dégagent dans le récipient tout en refoulant ces gaz vers un mélangeur air/carburant,

Selon une troisième réalisation de l'invention, le but de l'invention est également atteint par un kit à installer sur un moteur à combustion interne et comportant un dispositif d'alimentation pour un moteur à combustion interne, ce dispositif comprenant une ou plusieurs des caractéristiques décrites ci-dessus. L'invention couvre également des dispositifs d'alimentation pour un moteur à combustion interne, comprenant une ou plusieurs combinaisons des caractéristiques décrites ci-dessus.

### BRÈVE DESCRIPTION DES FIGURES

La Figure 1 montre un dispositif pour gazéifier un carburant liquide et pour produire un mélange air/carburant amélioré.
La Figure 2 montre un moyen intermédiaire pour connecter le dispositif de la figure 1 à la pipe d'admission d'un moteur.
La Figure 3 montre une variante du dispositif de la figure 1,
La Figure 4 montre, d'une façon schématique, une autre variante d'un dispositif pour gazéifier un carburant liquide.

### DESCRIPTION DÉTAILLÉE DE L'INVENTION.

L'invention est basée sur le principe de la gazéification d'un carburant liquide et la production d'un mélange air/carburant optimum.

Dans les figures, les mêmes éléments ont les mêmes chiffres de référence.

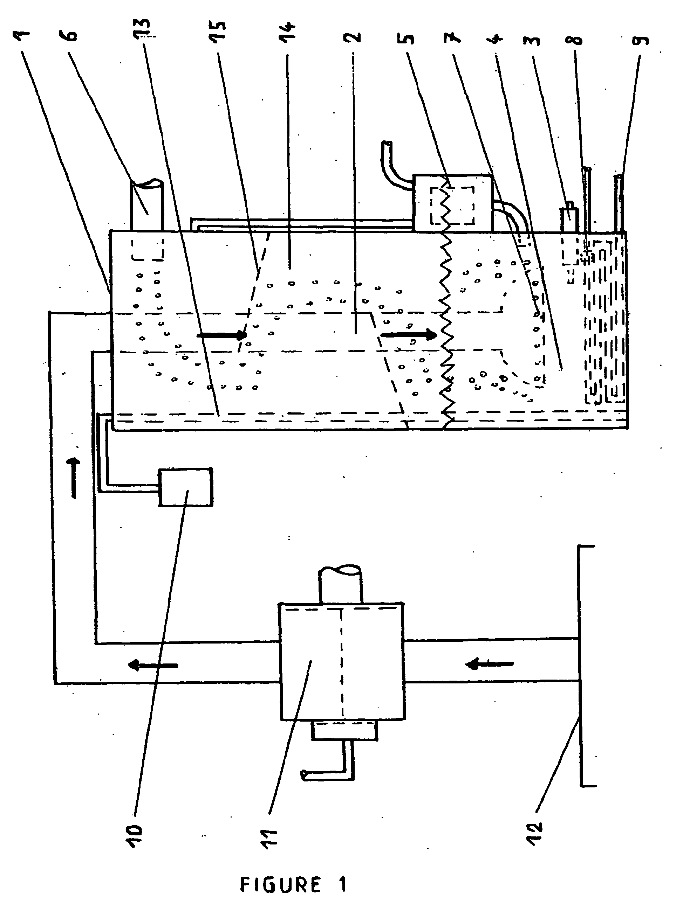

La Figure 1 illustre un dispositif pour réaliser ce principe selon l'invention. Ce dispositif comprend un récipient (1) qui contient du carburant liquide (4). Un appareil de niveau constant (5), solidaire au récipient (1) maintient le niveau du carburant dans le récipient (1) à une certaine valeur. L'appareil de niveau constant (5) est relié au récipient (1) par le haut pour annuler l'effet de dépression liée au fonctionnement. Un tuyau d'arrivée d'air (2) est plongé dans le récipient (1). Ce tuyau prend d'un côté de l'air de l'extérieur et est relié de l'autre côté à un distributeur d'air (7), qui est percé de trous sur les côtés, le fond du distributeur étant fermé. Il doit y avoir suffisamment de trous pour permettre à l'air de s'échapper dans une quantité suffisante. Le distributeur d'air (7) est installé de telle façon qu'il soit toujours immergé dans le carburant liquide. Selon une forme de réalisation préférée, l'air de l'extérieur est préchauffé par le système d'échappement (12) avant d'être envoyé vers le tuyau d'arrivée d'air (2). Dans la partie de l'alimentation en air, un clapet piloté par thermostat (11) peut alimenter le dispositif en air chaud ou en air froid, selon les besoins.

Une dérivation du circuit de refroidissement du moteur (p. ex. le serpentin 8,9) par laquelle l'eau chaude peut circuler, permet de réchauffer le carburant. Un calorstat (8) sert à maintenir la température du carburant à une valeur optimale, indépendante de la température de l'eau de refroidissement.

Un thermomètre à distance (thermomètre 10 avec sonde plongeante étanche 13) est utilisé pour mesurer la température du carburant ; cette température peut être indiquée sur le tableau de service ou sur le tableau de bord.

Une résistance chauffante (3) permet de chauffer le carburant liquide (4) lors du démarrage à froid à une température définie. Un réglage peut également être prévu afin de garantir une température constante du carburant lors du chauffage par cette résistance.

Le mélange air/carburant quitte le récipient (1) par un tuyau de sortie (6).

Un moyen intermédiaire pour connecter ce tuyau de sortie (6) à la pipe d'admission (19) d'un moteur est illustré dans la Figure (2). Ce moyen intermédiaire comprend une arrivée d'alimentation (16) qui est reliée au tuyau de sortie (6), p. ex. par un tuyau flexible. Le moyen intermédiaire comprend en plus un papillon d'appel à la dépression (20) et un clapet starter (17), relié par un câble au starter du véhicule.

Le moyen intermédiaire comprend aussi un clapet anti-retour mécanique (15) situé à l'entrée de la pipe d'admission pour protéger le dispositif contre une explosion en cas d'auto allumage. Dans ce cas, un clapet mécanique (18) situé à l'entrée opposée, permet l'évacuation de la pression provoquée par l'auto allumage.

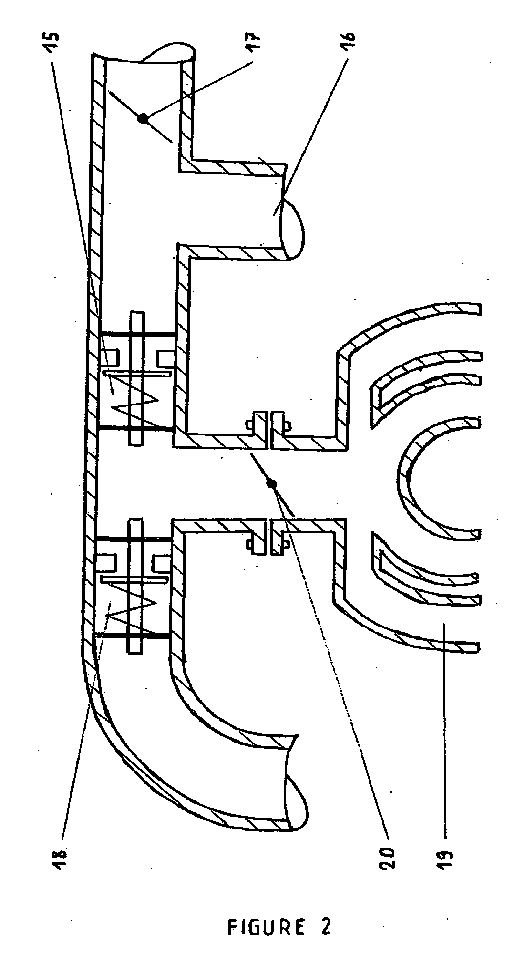

Le fonctionnement du dispositif selon les figures 1 et 2 est le suivant. Quand le ou un des cylindres du moteur est dans le temps « admission », un vide est créé dans le récipient (1) à travers le tuyau (6). Suite à ce vide, une partie du carburant s'évapore et le gaz résultant est aspiré avec l'air extérieur, qui arrive par le distributeur d'air (7). Un mélange optimal air/carburant gazéifié est aspiré vers le cylindre concerné où le mélange sera enflammé par un moyen d'allumage externe (bougie) ou par auto-allumage, selon le type de fonctionnement du moteur.

L'évaporation du carburant dans le récipient demande de l'énergie (calories) et, comme le processus d'évaporation est un processus adiabatique, le carburant va se refroidir. Pour cette raison il est important de prévoir des moyens pour chauffer le carburant.

Pour avoir une combustion optimale du mélange air/carburant, il faut avoir une proportion stoechiométrique des volumes air/carburant. Il s'est avéré dans la pratique que, dans le cas d'un moteur à essence, une combustion optimale du mélange est obtenue quand le carburant possède une température moyenne de 22°C plus ou moins quelques degrés. Pour cette raison, un circuit de réglage de la température du carburant est prévu avec le calorstat (8). Il est à souligner que la valeur de 22°C est une valeur expérimentale et que la valeur optimale de la température du carburant peut être influencée par certains facteurs comme la dépression dans le récipient, la nature du carburant utilisé, la géométrie du récipient, etc.

Une autre condition pour obtenir une bonne combustion du mélange réside dans le fait que le pourcentage des particules du carburant sous forme liquide dans le mélange air/carburant, aspiré par le cylindre, soit le plus bas possible et que le carburant, présent dans le mélange soit pratiquement complètement à l'état gazeux. Ce résultat est obtenu en prévoyant des moyens pour « essorer » le mélange, c'est-à-dire séparer au maximum les parties liquides (p.ex. sous forme de petites gouttes) du mélange. Dans ce but, des cloisons peuvent être prévues dans le récipient (voir dans la figure 1, les cloisons inclinées 15, montées au-dessus du carburant, à travers lesquelles le mélange se déplace). Mais il est aussi possible de prévoir dans ce but d'autres moyens comme un séparateur de gouttes, un décanteur, etc.

Avantageusement on peut encore prévoir un réglage du mélange air/carburant en ajoutant de l'air quand le mélange est trop riche et en réduisant l'arrivée de l'air quand le mélange est trop pauvre.

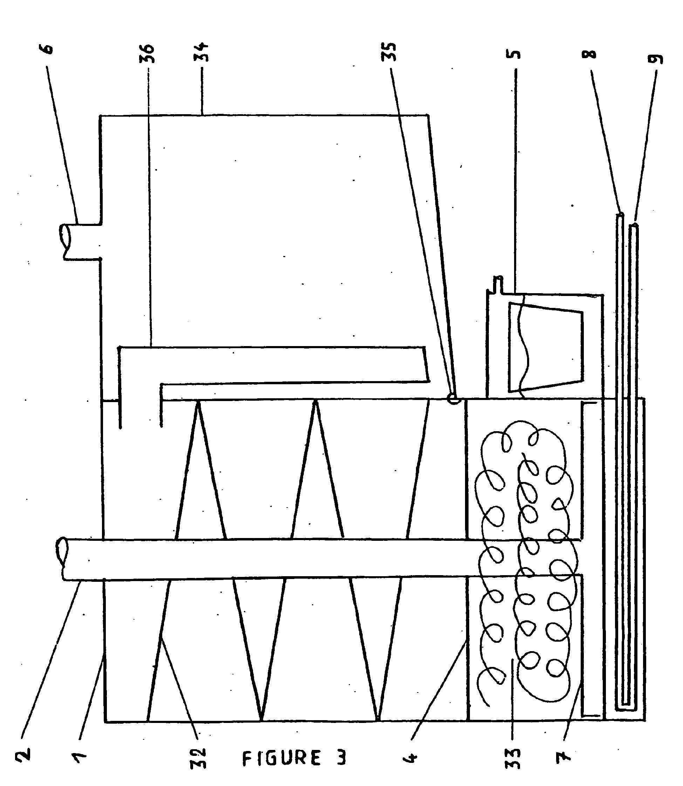

La Figure 3 illustre une variante du dispositif selon la figure 1 ; certains éléments, comme l'alimentation en air extérieur, ne sont plus représentés pour des raisons de simplification. Dans cette figure 3, un récipient (1) est alimenté en carburant liquide (4) à travers un appareil (5) qui maintient le niveau du carburant liquide. L'air extérieur est aspiré par le tuyau (2) et le mélange air/carburant est envoyé au moteur par le tuyau (6). Au-dessus du distributeur d'air (7) troué et dans le carburant se trouve un élément stabilisateur (33) ; cet élément stabilisateur est très poreux (33) et présente la caractéristique de multiplier les bulles d'air dans le carburant et en même temps de stabiliser la surface supérieure du carburant liquide de façon qu'elle reste plus ou moins stable, c'est-à-dire horizontale lors des mouvements du récipient, p. ex. dans les virages ou sur les pentes. Un élément qui s'est avéré très effectif est constitué par une couche de copeaux INOX, mais une couche comprenant une ou plusieurs autres matières est également possible. Une autre solution pour stabiliser le dispositif consiste dans une suspension à cardan du récipient.

Selon la réalisation de la figure 3, le mélange air/carburant est « essoré » par un circuit hélicoïdal (32) suivi d'un décanteur (34). Dans ce dernier, la séparation des gouttes liquides est obtenue par le mouvement angulaire que le mélange air/carburant subit dans un tuyau (36). Un petit trou (35), situé au fond du décanteur (34) sert de retour pour le carburant liquide vers le récpient. Il est bien évident que chacun des éléments circuit hélicoïdal (32) et décanteur (34) peut aussi être utilisé séparément comme moyen d'essorage, sans qu'il soit nécessaire d'utiliser une combinaison des deux.

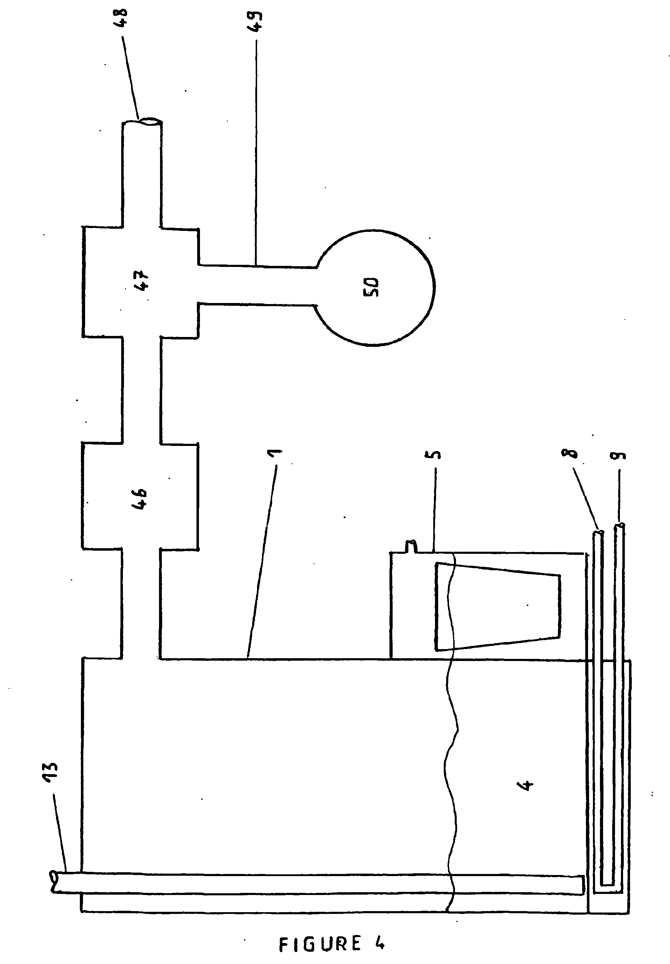

Dans la réalisation selon la figure 4, le récipient (1) sert seulement comme élément pour gazéifier le carburant liquide, la production du mélange air/carburant se faisant ultérieurement. Le dispositif de la figure 4 comporte un récipient (1), alimenté en carburant à travers un appareil de maintien de niveau constant (5) avec un élément de chauffage (8, 9). Une pompe à vide (46), reliée au récipient (1) crée un vide au-dessus du carburant liquide (4) et permets ainsi la gazéification du carburant. Les gaz du carburant sont envoyés par la pompe à vide (46) vers un mélangeur air/carburant (47), qui est alimenté en air extérieur par un tuyau (48). Le mélange air/carburant est ensuite renvoyé vers un moteur à combustion interne (50) par un autre tuyau (49).

Les détails de contrôle et de réglage ne sont pas représentés dans la figure 4, mais il est clair que de tels moyens de contrôle et de réglage peuvent être prévus, p. ex. comme ceux du dispositif de la figure 1 ou des moyens, bien connus par l'homme de l'art.

Le récipient (1) peut être constitué par le réservoir de carburant du moteur, mais il est de préférence constitué par un réservoir distinct, de dimensions et de localisation appropriées. En effet, réchauffer tout le carburant dans le réservoir de carburant du moteur diminuerait la capacité en carburant dudit réservoir et il est également préférable d'installer le récipient (1) pas trop loin du moteur. De plus, un réservoir de carburant classique n'est pas très adapté pour fonctionner en tant que récipient du dispositif selon l'invention.

Il s'est avéré que par l'utilisation du dispositif selon l'invention le rendement des moteurs à combustion interne peut être augmenté à plus de 60%, contre un rendement normal de l'ordre de 35 à 45%. Ce qui entraîne automatiquement une forte réduction des gaz polluants d'échappement et de la consommation en carburant.

Le dispositif d'alimentation pour un moteur à combustion interne, selon l'invention, peut être installé déjà à l'origine, mais l'invention prévoit également des kits comprenant un tel dispositif, permettant d'adapter des moteurs existants à la nouvelle technologie.

L'invention est d'application aussi bien sur les moteurs à essence que sur les moteurs diesel et sur les moteurs qui utilisent du carburant bio (p.ex. éthanol, colza) ou un mélange des différents types de carburants.

Dans le cas des moteurs Diesel, en particulier des moteurs Diesel existants, il y a différentes possibilités d'adaptation de ces moteurs afin de les rendre aptes à utiliser un dispositif selon l'invention. Une possibilité est de transformer le moteur Diesel en moteur essence en adaptant le taux de compression (technique bien connue) et en le prévoyant de bougies. Une autre possibilité prévoit un fonctionnement combiné avec d'un côté le moteur Diesel classique tournant au ralenti avec de l'autre côté une alimentation à travers un dispositif selon l'invention. De plus, l'invention peut être utilisée aussi bien sur les moteurs stationnaires (p. ex. les groupes électrogènes) que sur les moteurs mobiles (voitures, bus, camions, bateaux, tracteurs). Dans le cas des moteurs à essence, le dispositif selon l'invention peut remplacer le carburateur.

L'invention n'est pas limitée aux réalisations telles que présentées dans les figures et décrites dans la description ci-dessus mais elle englobe aussi d'autres formes de réalisation que l'expert dans le domaine peut dériver de ces réalisations.

## Revendications

1. Dispositif d'alimentation pour un moteur à combustion interne dans lequel le carburant liquide est gazéifié, comportant :
- un récipient (1) avec du carburant (4),
- un tuyau d'arrivée d'air (2) muni d'un distributeur d'air (7), immergé dans le carburant (4),
- un tuyau de sortie (6) de mélange air-carburant gazéifié au travers duquel un vide est créé dans le récipient (1),
- un appareil de niveau constant (5) qui maintient le niveau du carburant dans le récipient (1) à une certaine valeur,
- un circuit (8,9) pour chauffer le carburant comportant des moyens pour maintenir la température du carburant à une valeur optimale.

2. Dispositif d'alimentation pour un moteur à combustion interne selon la revendication 1, dans lequel le distributeur d'air est muni de trous sur ses côtés.

3. Dispositif d'alimentation pour un moteur à combustion interne selon la revendication 1 ou 2, dans lequel le circuit pour chauffer le carburant utilise l'eau de refroidissement du moteur.

4. Dispositif d'alimentation pour un moteur à combustion interne selon une des revendications 1 à 3, dans lequel les moyens pour maintenir la température du carburant à une valeur optimale sont constitués par un calorstat, installé dans le circuit pour chauffer le carburant.

5. Dispositif d'alimentation pour un moteur à combustion interne selon une des revendications 1 à 4 dans lequel dans lequel le système pour chauffer le carburant comprend une résistance chauffante.

6. Dispositif d'alimentation pour un moteur à combustion interne selon une des revendications 1 à 5 dans lequel la valeur optimale à laquelle la température du carburant dans le récipient est maintenue est, en moyenne, 22°C plus ou moins quelques degrés.

7. Dispositif d'alimentation pour un moteur à combustion interne selon une des revendications 1 à 6 qui comprend des moyens pour essorer le mélange air/carburant.

8. Dispositif d'alimentation pour un moteur à combustion interne selon une des revendications 1 à 7 qui comprend un élément de stabilisation, situé au-dessus du distributeur d'air.

9. Dispositif d'alimentation pour un moteur à combustion interne selon la revendication 8 dans lequel l'élément de stabilisation est constitué par une couche de copeaux inox.

10. Kit à installer sur un moteur à combustion interne et comportant un dispositif d'alimentation pour un moteur à combustion interne selon une des revendications 1 à 9.

## Claims

1. A supply device for an internal-combustion engine in which the liquid fuel is gasified, comprising:
- a container (1) with fuel (4),
- an air inlet pipe (2) fitted with an air diffuser (7) submerged in the fuel (4),
- an outlet pipe (6) for the air-fuel mixture via which a vacuum is created in the container (1),
- a constant - level apparatus (5) which maintains the level of the fuel in the container (1) at a certain value,
- a circuit (8, 9) for heating the fuel, comprising means for maintaining the temperature of the fuel at an optimum value.

2. The supply device for an internal-combustion engine as claimed in claim 1, in which the air diffuser has holes in its sides.

3. The supply device for an internal-combustion engine as claimed in claim 1 or 2, in which the fuel heating circuit uses the engine cooling water.

4. The supply device for an internal-combustion engine as claimed in one of claims 1-3, in which the means for maintaining the temperature of the fuel at an optimum value consist of a thermostat installed in the fuel heating circuit.

5. The supply device for an internal-combustion engine as claimed in one of claims 1-4, in which the fuel heating system comprises a heating resistor.

6. The supply device for an internal-combustion engine as claimed in one of claims 1-5, in which the optimum value at which the temperature of the fuel in the container is maintained is, on average, 22°C plus or minus a few degrees.

7. The supply device for an internal-combustion engine as claimed in one of claims 1-6, which comprises means for drying the air/fuel mixture.

8. The supply device for an internal-combustion engine as claimed in one of claims 1-7, which comprises a stabilizing means located above the air diffuser.

9. The supply device for an internal-combustion engine as claimed in claim 8, in which the stabilizing means consists of a layer of stainless-steel chips.

10. A kit for installing on an internal-combustion engine and comprising a supply device for an internal-combustion engine as claimed in one of claims 1-9.

## Patentansprüche

1. Versorgungsvorrichtung für einen Verbrennungsmotor, in dem der flüssige Kraftstoff vergast wird, die aufweist:
- einen Behälter (1) mit Kraftstoff (4),
- eine Luftzuleitung (2), die mit einem in den Kraftstoff (4) eingetauchten Luftverteiler (7) ausgestattet ist,
- eine Ableitung (6) für das vergaste Luft-Kraftstoff-Gemisch, durch die im Behälter (1) ein Vakuum geschaffen wird,
- ein Konstantniveaugerät (5), das das Niveau des Kraftstoffs in dem Behälter (1) auf einem bestimmten Wert hält,
- einen Kreis (8, 9), um den Kraftstoff zu beheizen, der Mittel umfasst, um die Kraftstofftemperatur auf einem optimalen Wert zu halten.

2. Versorgungsvorrichtung für einen Verbrennungsmotor nach Anspruch 1, wobei der Luftverteiler an seinen Seiten mit Löchern ausgestattet ist.

3. Versorgungsvorrichtung für einen Verbrennungsmotor nach Anspruch 1 oder 2, wobei der Kreis zum Beheizen des Kraftstoffs das Kühlwasser des Motors verwendet.

4. Versorgungsvorrichtung für einen Verbrennungsmotor nach einem der Ansprüche 1 bis 3, wobei die Mittel zum Halten der Kraftstofftemperatur auf einem optimalen Wert von einem Thermostat gebildet werden, das in dem Kreis zum Beheizen des Kraftstoffs installiert ist.

5. Versorgungsvorrichtung für einen Verbrennungsmotor nach einem der Ansprüche 1 bis 4, wobei das System zum Beheizen des Kraftstoffs einen Heizwiderstand umfasst.

6. Versorgungsvorrichtung für einen Verbrennungsmotor nach einem der Ansprüche 1 bis 5, wobei der optimale Wert, auf dem die Temperatur des Kraftstoffs in dem Behälter gehalten wird, durchschnittlich 22 °C plus oder minus einige Grade beträgt.

7. Versorgungsvorrichtung für einen Verbrennungsmotor nach einem der Ansprüche 1 bis 6, die Mittel zum Schleudern des Luft-Kraftstoff-Gemischs umfasst.

8. Versorgungsvorrichtung für einen Verbrennungsmotor nach einem der Ansprüche 1 bis 7, die ein Stabilisationselement umfasst, das sich über dem Luftverteiler befindet.

9. Versorgungsvorrichtung für einen Verbrennungsmotor nach Anspruch 8, wobei das Stabilisierungselement aus einer Schicht aus Edelstahlspänen besteht.

10. Installationsset für einen Verbrennungsmotor mit einer Versorgungsvorrichtung für einen Verbrennungsmotor nach einem der Ansprüche 1 bis 9.
